# FASCICULE DE BREVET EUROPEEN

(11) **EP 0 439 979 B1**
(45) Date de publication et mention de la délivrance du brevet: **16.06.1993**
(21) Numéro de dépôt: 90403805.6
(22) Date de dépôt: 28.12.1990
(51) Int. Cl.: B60G 21/055, B60G 17/01

(54) **Dispositif perfectionné de correction d'assiette d'un véhicule automobile**
Verbesserte Vorrichtung zur Lageregelung eines Kraftfahrzeuges
Improved apparatus for level control of a motor vehicle

(30) Priorité: 30.01.1990 FR 9001085
(43) Date de publication de la demande: 07.08.1991
(73) Titulaire: AUTOMOBILES PEUGEOT, 75116 Paris (FR); AUTOMOBILES CITROEN, 92200 Neuilly-sur-Seine (FR)
(72) Inventeur: Camizuli, Alain, F-92700 Colombes (FR)
(74) Mandataire: Durand, Yves Armand Louis

(56) Documents cités:
- EP-A- 0 354 113
- WO-A-89/04262
- US-A- 4 892 329
- PATENT ABSTRACTS OF JAPAN vol. 13, no. 281 (M-842)(3629) 27 juin 1989, & JP-A-1 74115 (TOYOTA) 20 mars 1989,
- PATENT ABSTRACTS OF JAPAN vol. 13, no. 257 (M-837)(3605) 14 juin 1989, & JP-A-1 60413 (TOYOTA) 7 mars 1989,

## Description

La présente invention a pour objet des perfectionnements à un dispositif de correction d'assiette d'un véhicule automobile.

On connaît déjà d'après le document EP-A-0 354 113 publié le 7 Février 1990 et appartenant à l'état de la technique selon l'article 54(3) CBE, un dispositif de correction d'assiette d'un véhicule automobile qui comprend notamment un train de roues directrices dont les supports sont chacun reliés à la caisse du véhicule par un bras monté oscillant par rapport à la caisse autour d'un axe sensiblement parallèle à l'axe longitudinal du véhicule, tandis qu'une barre anti-dévers montée pivotante sur la caisse transversalement à l'axe longitudinal du véhicule, est reliée par ses deux extrémités opposées respectivement aux deux supports de roues par l'intermédiaire d'un vérin prévu sur au moins l'un des deux supports de roues et dont la longueur est contrôlée par un régulateur lui-même commandé par un calculateur répondant aux signaux de plusieurs capteurs dont l'un détecte l'angle du volant de direction du véhicule.

On connaît par ailleurs d'après le document US-A-4 892 329 un dispositif de correction d'assiette de même type que celui décrit dans le préambule de la revendication 1.

Dans ces systèmes dits à anti-dévers actif, les extrémités reliées de la barre anti-dévers et du vérin peuvent subir des déplacements importants par rapport aux pièces environnantes, qui risquent d'être heurtées.

Aussi, la présente invention a pour but de remédier à l'inconvénient ci-dessus en proposant des perfectionnements qui résolvent le problème des déplacements trop importants et préjudiciables aux pièces environnantes, de la barre anti-dévers et du vérin.

A cet effet, l'invention a pour objet un dispositif perfectionné de correction d'assiette d'un véhicule automobile, qui est du type défini ci-dessus et qui est caractérisé en ce que le calculateur précité reçoit les signaux d'au moins deux autres capteurs détectant respectivement la position angulaire de l'extrémité de la barre anti-dévers reliée à la tige du vérin, et la position verticale du support de roue sur lequel est monté articulé le corps dudit vérin, et en ce que le calculateur est conçu de manière à limiter la longueur du vérin par l'intermédiaire du régulateur 8 lorsque l'angle du volant correspond à un angle de braquage des roues proche du maximum et que ladite extrémité de la barre anti-dévers ou la partie du vérin qui y est reliée risque de heurter une pièce environnante.

On précisera ici que les signaux provenant du capteur détectant l'angle du volant de direction et provenant des deux autres capteurs précités sont comparés avec un programme mis en mémoire dans le calculateur de façon à déterminer la limitation de la longueur du vérin associé à au moins l'un des supports de roues.

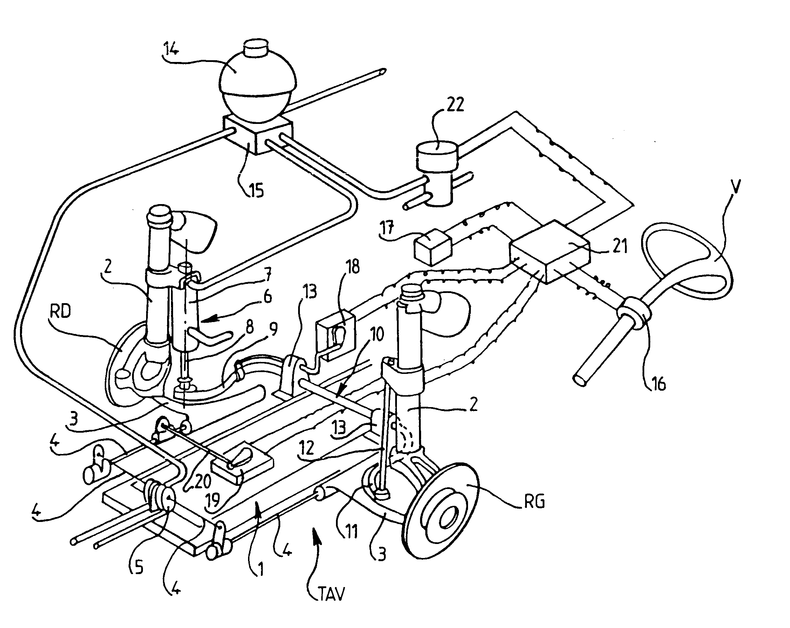

Mais d'autres caractéristiques et avantages de l'invention apparaîtront mieux dans la description détaillée qui suit et se réfère à la figure unique annexée qui est une vue schématique et en perspective du train avant d'un véhicule automobile, comportant les perfectionnements selon cette invention.

On voit sur cette figure le train avant TAV d'un véhicule automobile, qui est équipé de deux roues directrices droite RD et gauche RG liées à la caisse du véhicule repérée d'une manière générale en 1.

Les deux roues sont chacune solidaires de supports 2 reliés à la caisse 1 du véhicule par un bras 3 monté oscillant par rapport à la caisse 1 autour d'un axe sensiblement parallèle à l'axe longitudinal du véhicule.

Suivant l'exemple de réalisation représenté, un jeu de tringles 4 commandées par les oscillations des bras 3 actionne une valve hydraulique 5 raccordée par un circuit hydraulique à un vérin 6 dont le corps 7 est articulé sur l'un des supports de roues 2, à savoir le support de la roue avant droite RD suivant l'exemple représenté et dont la tige 8 est articulée à l'une 9 des extrémités d'une barre anti-dévers 10 dont l'autre extrémité 11 est rigidement liée au support 2 de la roue gauche RG par l'intermédiaire d'une tige rigide 12 par exemple.

La barre anti-dévers 10 est montée pivotante sur la caisse 1 du véhicule transversalement à l'axe longitudinal de ce véhicule, et cela par l'intermédiaire de paliers 13 fixés sur la caisse 1.

Le circuit hydraulique de raccordement de la valve hydraulique 5 au vérin 6 est équipé d'une sphère hydraulique 14 associée à un régulateur 15 commandé par des capteurs qui permettent ou non la communication du circuit hydraulique avec la sphère 14.

On a montré en 16 un capteur détectant l'angle du volant de direction V ainsi que la vitesse de rotation de ce volant, et en 17 un capteur détectant la vitesse linéaire du véhicule.

Conformément à l'invention, il est encore prévu un capteur 18 détectant la position angulaire de l'extrémité 9 de la barre anti-dévers 10 reliée à la tige 8 du vérin 6, et il est également prévu encore un autre capteur 19 détectant la position angulaire du support 2 de roue sur lequel est monté articulé le vérin 6, c'est-à-dire le support de la roue droite, suivant l'exemple illustré.

On observera ici que, dans l'exemple représenté, le capteur 19 est raccordé par une tringle ou analogue 20 à une tringle 4 solidaire du bras 3 associé au support 2 de la roue droite RD.

Les capteurs 16, 17, 18 et 19 sont reliés à un calculateur 21 susceptible de commander une électrovanne 22 raccordée au régulateur 15.

La limitation de la longueur du vérin 6 sera commandée par les signaux provenant des trois capteurs 16, 18 et 19 et qui sont comparés avec un programme mis en mémoire dans le calculateur 21.

En d'autres termes, ce calculateur 21 permettra de limiter les débattements du vérin 6, par l'intermédiaire du régulateur 15, lorsque l'angle du volant V correspondra à un angle de braquage des roues RD, RG proche du maximum et que par conséquent l'extrémité 9 de la barre anti-dévers 10 ou la partie du vérin qui y est reliée risquerait de heurter une pièce environnante.

Bien entendu, l'invention n'est nullement limitée au mode de réalisation décrit et illustré qui n'a été donné qu'à titre d'exemple,

C'est ainsi que le capteur angulaire 18 lié à l'extrémité 9 de la barre anti-dévers 10 du côté du vérin 6, pourrait être remplacé par un capteur linéaire, parallèle ou intégré audit vérin 6.

## Revendications

1. Dispositif perfectionné de correction d'assiette d'un véhicule automobile, comprenant notamment un train de roues directrices dont les supports (2) sont chacun reliés à la caisse (1) du véhicule par un bras (3) monté oscillant par rapport à la caisse autour d'un axe sensiblement parallèle à l'axe longitudinal du véhicule, tandis qu'une barre anti-dévers (10) montée pivotante sur la caisse (1) transversalement audit axe longitudinal du véhicule est reliée par ses deux extrémités opposées (9, 11) respectivement aux deux supports de roues (2) par l'intermédiaire d'un vérin (6) prévu sur au moins l'un des deux supports de roues et dont la longueur est contrôlée par un régulateur (15) commandé par un calculateur (21) répondant aux signaux de plusieurs capteurs dont l'un (16) détecte l'angle du volant de direction (V), caractérisé en ce que ledit calculateur reçoit les signaux d'au moins deux autres capteurs (18, 19) détectant respectivement la position angulaire de l'extrémité (9) de la barre anti-dévers (10) reliée à la tige (8) du vérin (6), et la position verticale du support de roue (2) sur lequel est monté articulé le corps (7) dudit vérin, et en ce que le calculateur (21) est conçu de manière à limiter la longueur du vérin (6) par l'intermédiaire du régulateur (15) lorsque l'angle du volant (V) correspond à un angle de braquage des roues proche du maximum et que ladite extrémité (9) de la barre anti-dévers (10) ou la partie du vérin qui y est reliée risque de heurter une pièce environnante.

2. Dispositif selon la revendication 1, caractérisé en ce que les signaux des trois capteurs précités (16, 18, 19) sont comparés avec un programme mis en mémoire dans le calculateur (21) de façon à déterminer la limitation de la longueur du vérin (6).

## Patentansprüche

1. Vervollkommene Vorrichtung zur Berichtigung der Fahrlage eines Kraftfahrzeugs mit insbesondere einem Satz Steuerräder deren Träger (2) jeweils mit dem Kasten (1) des Fahrzeugs durch einen in Bezug auf den Kasten um eine zur Längsachse des Fahrzeugs etwa parallele Achse schwingend angeordneten Arm (3) verbunden sind, während eine an dem Kasten (1) quer zur besagten Längsachse des Fahrzeugs schwenkbar angeordnete achssturzverhindernde Stange (10) mit ihren beiden entgegengesetzten Enden (9, 11) jeweils mit den beiden Radträgern (2) über einen wenigstens an einem der beiden Radträgern vorgesehenen Kraftzylinder (6) verbunden ist und dessen Länge durch einen von einem Rechner (21) gesteuerten Regler (15) kontrolliert wird, welcher Rechner auf die Signale von mehreren Messwertgebern anspricht, von denen einer (16) den Winkel des Lenkrades (V) ermittelt, dadurch gekennzeichnet, dass der besagte Rechner die Signale von wenigstens zwei anderen Messwertgebern (18, 19) empfängt, welche jeweils die Winkellage des Endes (9) der mit der Stange (8) des Kraftzylinders (6) verbundenen achssturzverhindernden Stange (10) und die senkrechte Lage des Radträgers (2) an welchem der Körper (7) des besagten Kraftzylinders gelenkig angeordnet ist, ermittelt, und dass der Rechner (21) ausgelegt ist, um die Länge des Kraftzylinders (6) über den Regler (15) zu begrenzen, wenn der Winkel des Lenkrades (V) einem dem Höchstwert nahen Ausschlagwinkel der Räder entspricht und wenn das besagte Ende (9) der achsturzverhindernden Stange (10) oder derjenige Teil des Kraftzylinders, der damit verbunden ist, die Gefahr läuft, gegen ein umgebendes Stück anzuprallen.

2. Vorrichtung nach Anspruch 1, dadurch gekennzeichnet, dass die Signale der drei vorgenannten Messwertgebern (16, 18, 19) mit einem in dem Rechner (21) gespeicherten Programm vergliechen werden, um die Begrenzung der Länge des Kraftzylinders (6) zu bestimmen.

## Claims

1. Improved device for the correction of the trimming position of an automotive vehicle comprising in particular a set of steering road wheels the supports (2) of each one of which are connected to the body (1) of the vehicle by an arm (3) mounted for swinging with respect to the body about an axis substantially parallel to the longitudinal axis of the vehicle, whereas an antitilting bar (10) pivotally mounted on the body (1) transversely of the said longitudinal axis of the vehicle is connected with its two opposite ends (9, 11) to both wheel supports (2), respectively, through the medium of a jack (6) provided on at least one of the two wheel supports and the length of which is controlled by a regulator (15) operated by a computer (21) responsive to the signals of several sensors, one (16) of which detects the angle of the steering wheel (V), characterized in that the said computer receives the signals of at least two other sensors (18, 19) respectively detecting the angular position of the end (9) of the antitilting bar (10) connected to the rod (8) of the jack (6) and the vertical position of the wheel support (2) on which is pivotally mounted the casing (7) of the said jack and in that the computer (21) is designed in such a manner as to limit the length of the jack (6) through the medium of the regulator (15) when the angle of the steering wheel (V) corresponds to a lock angle of the wheels close to the maximum and when the said end (9) of the antitilting bar (10) or that portion of the jack which is connected thereto risks to hit a surrounding part.

2. Device according to claim 1, characterized in that the signals of the three aforesaid sensors (16, 18, 19) are compared with a program stored within the computer (21) so as to determine the limitation of the length of the jack (6).
